# EUROPEAN PATENT SPECIFICATION

(11) **EP 0 293 698 B1**
(45) Date of publication and mention of the grant of the patent: **17.08.1994**
(21) Application number: 88108151.7
(22) Date of filing: 20.05.1988
(51) Int. Cl.: G09G 1/28, G09G 1/16

(54) **Graphic controller having function of painting designated area**
Grafik-Prozessor mit Farbfunktion für ein bezeichnetes Flächenstück
Processeur vidéo graphique avec fonction couleur pour un plan désigné

(30) Priority: 20.05.1987 JP 124783/87
(43) Date of publication of application: 07.12.1988
(73) Proprietor: NEC CORPORATION, Tokyo (JP)
(72) Inventor: Horiguchi, Ryuji, Tokyo (JP)
(74) Representative: Glawe, Delfs, Moll & Partner

(56) References cited:
- EP-A- 0 199 989
- US-A- 3 870 922
- US-A- 4 156 237
- US-A- 4 538 144

## Description

The present invention relates to a digital graphic controller and, more particularly, to such a controller having a function of painting a designated area.

A graphic controller controls a display memory and a display device such as a raster-scan type cathode ray tube (called hereinafter "CRT") to display characters and figures on the screen of the display device by use of data stored in the display memory. The controller has many functions including so-called "PAINT" function to paint a designated area on the screen with a desired color. The designated area often has a quadrilateral shape which is defined by four coordinate points A, B, C and D on a two-dimensional plane representing the screen and having X-coordinate and Y-coordinate, with a left side defined by a segment AC and a right side defined by a segment BD. In painting the quadrilateral area, the graphic controller calculates the respective X-coordinate values on the segments AC and BD with Y-coordinate values thereon being varied and draws a line of the desired color and/or pattern from each calculated X-coordinate value on the segment AC to each associated X-coordinate value on the segment BD.

The designated area is sometimes changed from the quadrilateral form to such a form that the segments AC and BD intersect with each other. That is a figure of two triangles. If the intersection point of the segments AC and BD is represented by "P", two triangle areas to be painted are represented by APB and PCD.

In painting such two triangle areas, the prior art graphic controller calculates the X- and Y-coordinate values of the intersection point P and further calculates the respective X-coordinate and Y-coordinate values of the two triangle areas APB and PCD independently of each other to paint the two triangle areas individually by use of the calculated coordinate values. Obtaining the coordinate values of the intersection point P requires complicated calculation to solve simultaneous equations and Calls for a large scale of software. As a result, a high speed painting can not be carried out. Moreover, a large hardware circuit is also required.

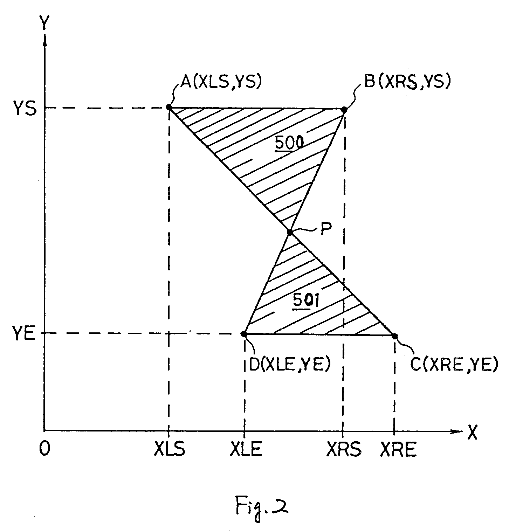

A graphic controller according to the preamble of claim 1 is disclosed in US-A-4 538 144. This graphic controller serves to shade the area between a first line parallel to the X- or Y-axis and a second line intersecting the first line. To this end the initial difference between the coordinate values of the first and second lines is obtained and then decremented and/or incremented in accordance with the change in X-coordinate value on the first and second lines, and the intersection point is obtained when the difference becomes zero. However, it has to be emphasized that in case the first line runs parallel to the Y-axis the X-coordinate of the intersecting point is known per se as it is the X-value of the first line. In case such a controller should be used for the problem mentioned with respect to fig. 2 it will also be necessary first to calculate the X-coordinate value of the intersecting point and then to shade the areas between the first line and a line parallel to the Y-axis and having the X-coordinate value of the intersecting point and then to shade the area between this parallel line and the second line.

As it can be seen from the above this known controller is advantageous only in a special case in that a line runs parallel to the X- or Y-axis, and in the general case in which both intersecting lines are inclined with respect to the X-axis it is also necessary to calculate the coordinate values of the intersecting point.

It is therefore an object of the present invention to provide a graphic controller having a function of painting a designated area at a high speed without employing a complicated circuit construction.

Another object of the present invention is to provide a graphic display controller for painting areas formed by two crossing straight lines without calculating X- and Y-coordinate values of the cross-point of the two straight lines.

These objects are achieved by a graphic controller as defined in claim 1, the dependent claims are related to further developments of the invention.

According to the present invention, the intersection point of the first and second lines is detected by comparing the respective X-coordinate values on the first and second lines. The heavy software operation for obtaining the coordinate values of the intersection point is unnecessary. Therefore, the designated area or areas are painted at a high speed and the increase in required hardware is suppressed.

Assuming that the X-coordinate value of the first point is smaller than the X-coordinate value of the second point, the comparing means produces the first output when the X-coordinate value on the first line is smaller than that on the second line and generates the second output when the former is larger than the latter. When the X-coordinate value of the first point is larger than the X-coordinate value of the second point, the comparing means produces the second output for the X-coordinate value on the first line smaller than that on the second line and generates the first output in case that the former is larger than the latter.

In an embodiment of the invention the two triangle areas are painted in the same manner as in painting a quadrilateral area without calculating coordinate values of the intersection point of the first and second lines.

### BRIEF DESCRIPTION OF THE DRAWINGS

The above and other objects, features and advantages of the present invention will be more apparent from the following description taken in conjunction with the accompanying drawings, in which
Fig. 1 is a block diagram representative of an embodiment of the present invention;
Fig. 2 is a pattern diagram representative of an example of an area to be painted by a graphics display controller shown in Fig. 1;
Fig. 3 is a block diagram representative of an example of a comparator shown in Fig. 1;
Fig. 4 is a block diagram representative of one embodiment of a drawing controller shown in Fig. 1;
Fig. 5 is a block diagram representative of an example of an X-coordinate exchanging circuit shown in Fig. 4;
Fig. 6 is a block diagram representative of an example of a right-direction drawing circuit shown in Fig. 4;
Fig. 7 is a block diagram representative of another embodiment of a drawing controller shown in Fig. 1;
Fig. 8 is a block diagram representative of an example of right-direction and left-direction drawing circuits shown in Fig. 7;
Fig. 9 is a drawing processing diagram representative of a circuit operation of one embodiment of the present invention; and
Fig. 10 is a drawing processing diagram representative of a circuit operation of another embodiment of the present invention.

### DETAILED DESCRIPTION OF THE EMBODIMENTS

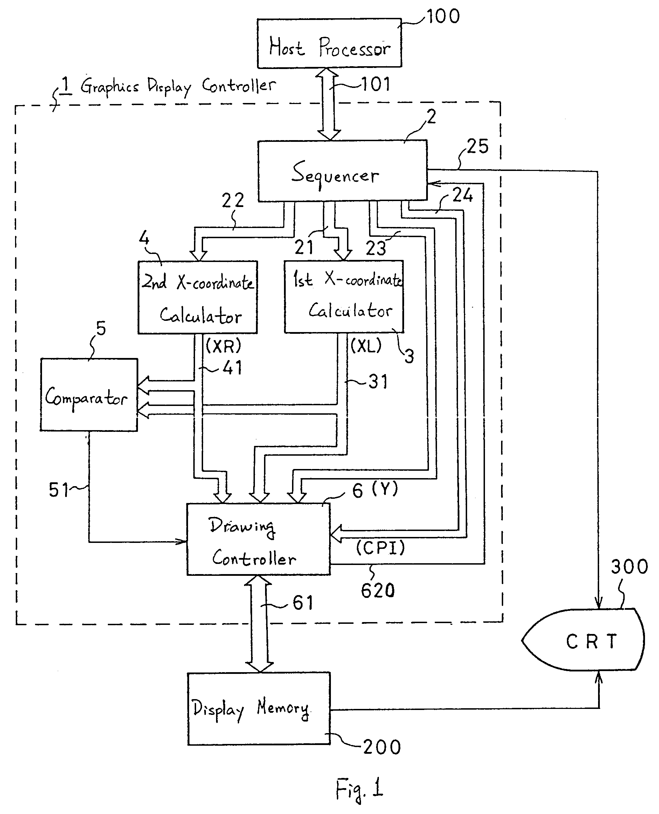

Referring to Fig. 1, a graphics display controller 1 according to an embodiment of the present invention receives command and data information from a host processor 100 via a bus 101. In response to thereto, the controller 1 controls data stored in a display memory 200 by use of an address/data bus 61 and instructs the memory 200 to supply data stored therein to a CRT 300. The controller 1 further supplies synchronizing signals to the CRT 300 via a line 25. Thus, characters and figures responsive to the data stored in the display memory 200 are displayed on a display screen of the CRT 300. Each one picture element of the display screen of the CRT 300 corresponds to each one bit of the display memory 200. Accordingly, the figures on the screen of the CRT 300 can be controlled by the data stored in the memory 200 which are in turn managed or controlled by the graphics display controller 1.

Referring to Fig. 2, one example of a figure to be displayed by the controller 1 on the display screen of the CRT 300 is shown. Since the display screen of the CRT 300 is represented as a two-dimensional plane defined by X-coordinate and Y-coordinate axes as shown in Fig. 2, each figure to be displayed and each area to be painted are defined by X-coordinate information and Y-coordinate information. Since each one picture element of the CRT 300 corresponds to each one bit of the display memory 200, each coordinate information denotes the address information of each bit of memory 200. In the example shown in Fig. 2, there are provided, on the display screen of the CRT 300, four points A, B, C and D having coordinate values (XLS, YS), (XRS, YS), (XRE, YE) and (XLE, YE), respectively, and areas surrounded by four segments AB, DC, AC and BD are required to be painted with a desired color and/or pattern, as shown by slants. Here, each of the points A and B has the same first Y-coordinate value YS and each of the points C and D has the same second Y-coordinate value YE. The point C has the X-coordinate value XRE that is larger than the X-coordinate value XLE of the point D. Therefore, the segments AC and BD intersect with each other at a point P, so that a first triangle area 500 defined by the points A, B and P and a second triangle area 501 defined by the points C, D and P are required to be painted. The graphics display controller 1 shown in Fig. 1 is provided with a circuit construction for painting these two triangle areas 500 and 501 at a high speed.

More specifically, a sequencer 2 in the graphic display controller 1 is supplied via the bus 101 from the host processor 100 with a "PAINT" command instructing to paint a designated area and the coordinate data (XLS, YS), (XRS, YS), (XRE, YE) and (XLE, YE) of the points A, B, C and D. The sequencer 2 decodes the "PAINT" command and stores the respective coordinate data. Since the segments AB and CD are in parallel with the X-coordinate axis, the respective Y-coordinate values thereof are constant and the respective X-coordinate values thereof are easily obtained by incrementing the values XLS and XLE by one or decrementing the values XRS and XRE by one. On the other hand, the segments AC and BD have a slope, and therefore the respective X-coordinate values thereof are required to be calculated. For this purpose, the sequencer 2 supplies a first X-coordinate calculator 3 with the coordinate data (XLS, YS) and (XRE, YE) of the points A and C via a data line 31 and a second X-coordinate calculator 4 with the coordinate data (XRS, YS) and (XLE, YE) of the points B and D via a data line 41. The first X-coordinate calculator 3 calculates the respective first X-coordinate values XL on the segment AC with the Y-coordinate value thereon being varied, by means of the DDA (Digital Differential Analyzer) algorithm. Similarly, the second calculator 4 calculates the respective second X-coordinate values XR on the segment BD with the Y-coordinate value thereon being varied, by means of the DDA algorithm. The X-coordinate calculation employing the DDA algorithm is well known In the art and does not relate directly to the present invention, and therefore the detailed description of the calculators 3 and 4 is omitted. Since the calculators 3 and 4 have the same circuit construction, only one calculator can be employed to calculate the first and second X-coordinate values XL and XR in time sharing.

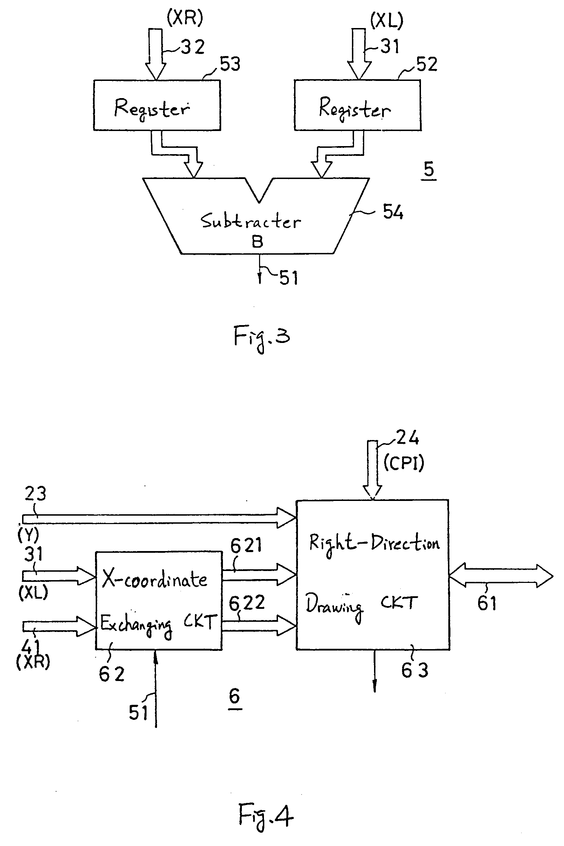

The first calculator 3 transfers the calculated first X-coordinate value XL to a data line 31 and the second calculator 4 transfers the calculated second X-coordinate value XR to a data line 41. These X-coordinate values XL and XR are compared with each other by a comparator 5 which is provided in accordance with the present invention. Referring to Fig. 3, the comparator 5 includes two registers 52 and 53 and a subtracter 54. The register 52 stores the first X-coordinate value XL and the register 53 stores the second X-coordinate value XR. The subtracter 54 subtracts the first X-coordinate value XL from the second X-coordinate value XR and produces a comparison output 51 at a borrow output terminal B. Therefore, the comparison output 51 takes a low level when the first X-coordinate value XL is equal to or smaller than the second X-coordinate value XR. The output 51 takes a high level when the value XL is larger than the value XR. Thus, the intersection point P of the segments AC and BD is detected easily.

Turning back to Fig. 1, the first and second X-coordinate values XL and XR and the comparison output 51 are supplied to a drawing controller 6 which is further supplied with a Y-coordinate value Y corresponding to the calculated first and second X-coordinate values XL and XR and drawing data CPI representative of a color and/or a pattern to be painted via data lines 23 and 24 from the sequencer 2, respectively. In response to these information, the drawing controller 6 reads out data of the areas 500 and 501 to be painted from the display memory 200, changes them with desired data responsive the drawing data CPI and then restores the changed data into the memory 200.

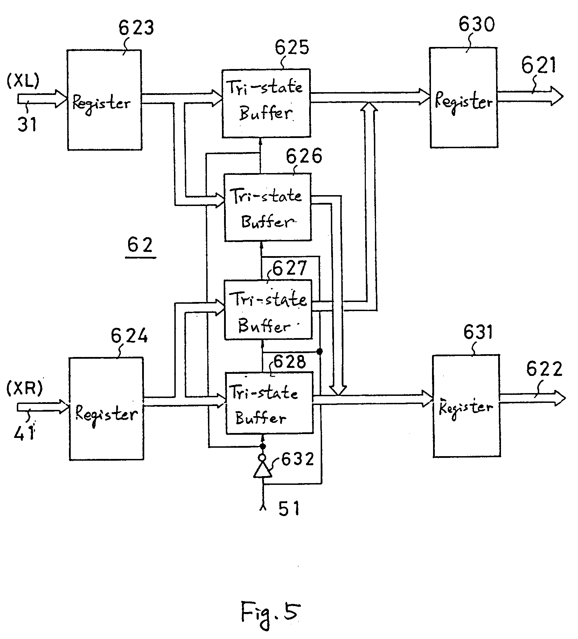

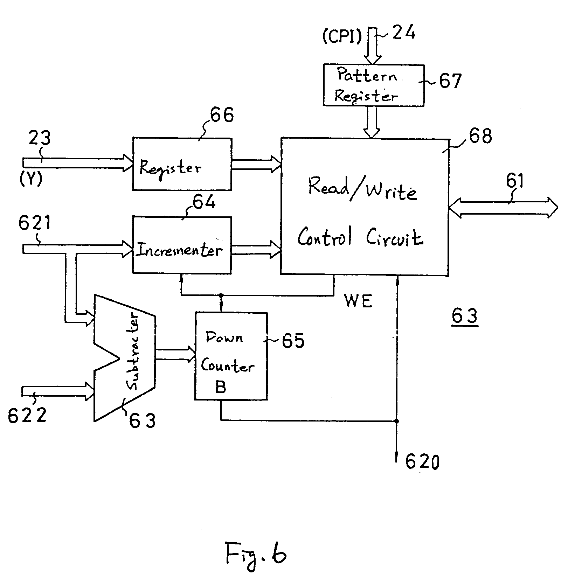

Referring to Fig. 4, the drawing controller 6 includes an X-coordinate exchanging circuit 62 and a right-direction drawing circuit 63 in accordance to one embodiment of the present invention. When the comparison output 51 from the comparator 5 takes the low level, the X-coordinate exchanging circuit 62 transfers the first and second X-coordinate values XL and XR on the data lines 31 and 41 to data lines 621 and 622, respectively. On the other hand, when the comparison output 51 takes the high level, the first and second X-coordinate values XL and XR are transferred to the data lines 622 and 621, respectively. The X-coordinate exchanging circuit 62 having this function is realized by a circuit construction shown in Fig. 5. More specifically, the first X-coordinate value XL is stored into a register 63 whose output is in turn supplied to registers 630 and 631 via tri-state buffers 625 and 626, respectively. The outputs of the registers 630 and 631 are connected to the data lines 621 and 622, respectively. The second X-coordinate value XR is stored into a register 624 whose output is in turn supplied to the registers 630 and 631 via tri-state buffers 627 and 628, respectively. When the comparison output 51 is in the low level, the tri-state buffers 626 and 627 are brought into a high impedance state. When the comparison output 51 is high level, on the other hand, the tri-state buffers 625 and 628 are brought into a high impedance state by an inverter 632. Turning back to Fig. 4, the X-coordinate value on the data line 621 and that on the data line 622 are supplied to the right-direction drawing circuit 63 as a drawing start coordinate and a drawing end coordinate, respectively, with respect to the same Y-coordinate value on the data line 23. Accordingly, the right-direction drawing circuit 63 writes the desired data responsive to the drawing information CPI into the display memory 200 from the bit designted by the drawing start coordinate and the bit designated by the drawing end coordinate in a right direction. When the data-writing is completed, the drawing circuit 63 supplies an end signal 620 to the sequencer 2. Referring to Fig. 6 illustrating a circuit construction of the right-direction drawing circuit 63, the X-coordinate value on the data line 621 is supplied to an incrementer 64 and to one input node of a subtracter 63 which has the other input node supplied with the X-coordinate value on the data line 622. The subtraction result derived from the subtracter 63 is stored into a presettable down counter 65. Therefore, the content of the counter 65 represents the number of bits to be drawn on the X-coordinate axis at a point of the same Y-coordinate value. The Y-coordinate value transferred via the data line 23 is stored into a register 66 whose output is in turn supplied to a read/write control circuit 68 along with the output of the incrementer 64. The control circuit 68 is further supplied with the output of a pattern register 67 storing the drawing information CPI. The read/write control circuit 68 makes access to the bit of the display memory 200 designated by the X-coordinate value from the incrementer 64 and the Y-coordinate value from the register 68 and writes the data responsive to the drawing information CPI into the accessed bit. When the data writing is completed, a write-end signal WE is generated to increase the content of the incrementer by one and decrease the content of the counter 65 by one. As a result, the next X-coordinate value is supplied to the read/write control circuit 68, and therefore a next bit is accessed and written with the data responsive to the drawing informtion CPI. When a borrow output is produced from the counter 65, i.e., when the data responsive to the drawing information CPI is written into the bit designated by the X-coordinate value on the data line 622, the read/write control circuit 68 completes the data writing into the display memory 200. The borrow output from the counter 65 is led out as the signal 620 to be supplied to the sequencer 2.

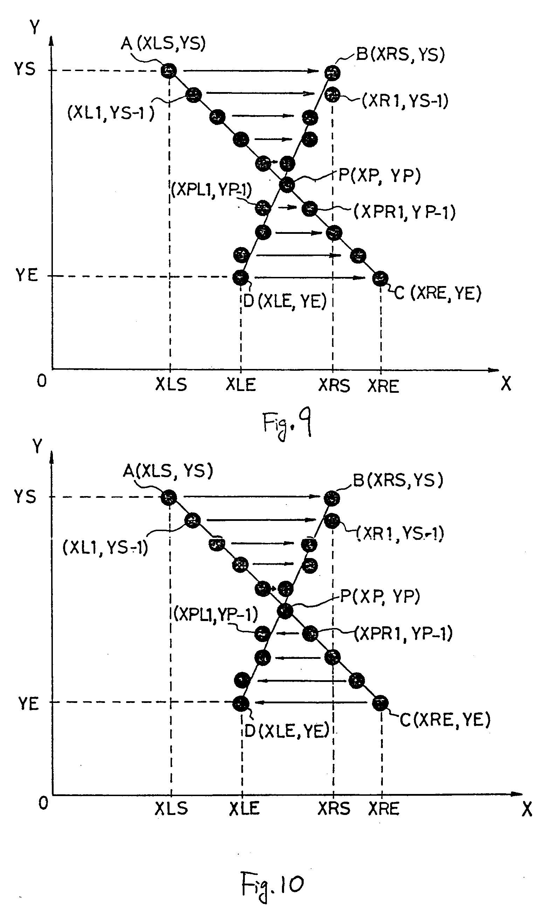

Referring to Figs. 1 to 6 and 9, a painting operation according to the present embodiment will be described below. At first, the sequencer 2 supplies the coordinate data of the points A and C to the calculator 3 via the data line 21 and supplies the coordinate data of the points B and D to the calculator 4 via the data line 22. Further, the sequencer 2 supplies the Y-coordinate value YS of the points A and B and the drawing information CPI to the drawing controller 6 via the data lines 23 and 24, respectively. The calculators 3 and 4 produce the respective X-coordinate values XL and XR on the segments AC and BD with the Y-coordinate value being varied, but in a first state they produce the X-coordinate values XLS and XRS of the points A and B, respectively. Since the X-coordinate value XLS is smaller than the X-coordinate value XRS, the comparison output 51 takes the low level. Accordingly, the X-coordinate exchanging circuit 62 transfers the X-coordinate values XLS ans XRS to the data lines 621 and 622, respectively. As a result, the read/write control circuit 68 writes the data responsive to the drawing information CPI into the display memory 200 from the bit designated by the coordinate data (XLS, YS), i.e. the point A, to the bit designated by the coordinate data (XRS, YS), i.e. the point B, in a right direction, as shown in Fig. 9. The signal 620 is thereafter produced. Therefore, the sequencer 2 transfers a next Y-coordinate value (YS-1) to the drawing controller 6 via the data line 24 and allows the calculators 3 and 4 to produce next X-coordinate values XL1 and XR1 on the segments AC and BD at a point of the Y-coordinate value (YS-1), respectively. Since the X-coordinate value XL1 is smaller than the value XR1, the comparison output 51 holds the low level. As a result, the data responsive to the drawing information CPI is written into the display memory from the bit designated by the coordinate data (XL1, YS-1) to the bit designated by the coordinate data (XR1, YS-1) in a right direction.

When the painting based on the above operation is advanced to the intersection point P of the segments AC and BP, both of the calculators 3 and 4 produce the X-coordinate value XP of the intersection point P. The comparison output 51 is not changed to the high level and the content of the counter 65 is zero. Accordingly, the data responsive to the drawing information CPI is written into only the bit of the display memory 200 designated by the coordinate data (XP, YP) of the intersection point P.

When the sequencer 2 outputs the Y-coordinate data taking a value (YP-1) that is smaller by one than the Y-coordinate value YP of the intersection point P, the first calculator 3 produces an X-coordinate value XPR1 that is larger than an X-coordinate value XPL1 produced by the second calculator 4. The comparison output 51 is thereby inverted to the high level. Accordingly, the X-coordinate exchanging circuit 62 transfers the X-coordinate value XPL1 produced by the second calculator 4 to the data line 621 and transfers the X-coordinate value XPR1 produced by the first calculator 3 to the data line 622. As a result, the read/write control circuit 68 writes the data responsive to the drawing information CPI into the display memory 200 from the bit designated by the coordinate data (XPL1, YP-1) to the bit designated by the coordinate data (XPR1, YP-1) in a right direction, as shown in Fig. 9. Since the comparison output 51 holds the high level until the Y-coordinate value reaches the value YE of the points C and D, the above-mentioned operation is repeated. Thus, two triangle areas 500 and 501 defined by the segments AB, CD, AC and BD are painted at a high speed, as shown in Fig. 2.

In Figs. 4 and 5, the right-direction drawing controller 63 can be replaced by a left-direction drawing controller which writes data into the display memory 200 in a left direction. In this case, the X-coordinate value on the data line 622 is supplied to a decrementer whose output is in turn transferred to the read/write control circuit 68. The incrementer 64 is not employed. Further, the presettable down counter 65 is replaced by a presettable up counter, or the down counter 65 is preset with the result obtained by subtracting the value on the data line 621 from that on the data line 622.

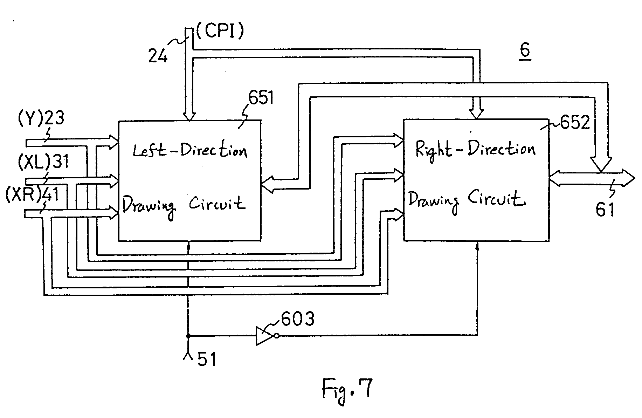

Referring to Fig. 7, the drawing controller 6 according to another embodiment of the present invention includes a left-direction drawing circuit 651 and a right-direction drawing circuit 625 which are coupled in parallel and one of which is activated by the comparison output 51. More specifically, the low level comparison output 51 activates the right-direction drawing circuit 652 through an inverter 603. In this case, the X-coordinate value XL on the data line 31 is employed as a drawing start coordinate data and the drawing circuit 652 writes the data responsive to the drawing information CPI into the display memory 200 from the bit designated by the drawing start coordinate data to the bit designated by the second X-coordinate value XR in a right direction. On the other hand, when the comparison output 51 takes the high level, the left-direction drawing circuit 651 is activated, so that the drawing is carried out in a left direction from the first X-coordinate value XL.

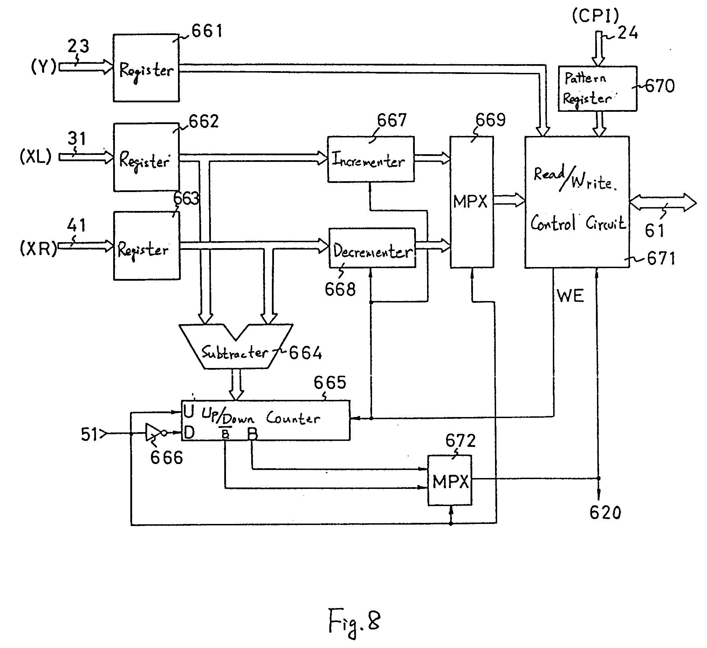

A detailed construction of the right-direction and left-direction drawing circuits 652 and 651 is shown in Fig. 8. The Y-coordinate value, first X-coordinate value XL, second X-coordinate value XR and drawing information CPI are stored into registers 661, 662, 663 and 670, respectively. The output of the register 662 is supplied via an incrementer 667 to one input node of a multiplexer (MPX) 669 which has the other input node supplied via a decrementer 668 with an output of the register 663. The MPX 669 selects the output of the incrementer 667 when the comparison output 51 is in the low level and the output of the decrementer 668 when the output 51 in the high level. The output of the incrementer 667 or decrementer 668 selected by the MPX 669 is transferred to a read/write control circuit 671. A subtracter 664 carries out a subtracting operation of the outputs of the registers 662 and 663 and supplies the subtraction result to a presettable up/down counter 665. The counter 665 operates as a down counter through an inverter 666 when the comparison output 51 takes the low level and as an up counter when the output 51 takes the high level. The borrow output B and its inverted output B̅ of the counter 665 are supplied to a multiplexer (MPX) 672 whose output is in turn supplied to the read/write control circuit 671 and to the sequencer 2 as the signal 620. The MPX 672 selects the borrow output B in response to the low level of the comparison output 51 and the inverted borrow output B̅ in response to the high level of the comparison output 51. A write-end signal WE is generated each time when the read/write control circuit 671 writes data into one bit of the display memory 200 designated the supplied Y-coordinate and X-coordinate values, so that the contents of the incrementer 667, decrementer 668 and counter 665 are changed by one in response to the generation of the signal WE. As a result, as shown in Fig. 10, the drawing is carried out in a right direction from each X-coordinate value on the segment AC to the associated X-coordinate value on the segment BD at a point of the same Y-coordinate value within the area defined by the points A, B and P, whereas the drawing is carried in a left direction from each X-coordinate value on the segment AC to the associated X-coordinate value on the segment BD at a point of the same Y-coordinate value within the area defined by the points C, D and P. If desired, the left-direction drawing circuit 651 may be activated when the comparison output 51 is the low level and the right-direction drawing circuit 652 may be activated when the comparison output 51 is the high level.

In the respective embodiments described hereinbefore, when the segments AC and BD do not intersect with each other, the X-coordinate exchanging and the drawing direction inversion do not occur, and therefore the painting of a quadrilateral area is executed.

The above embodiments, may be modified and changed, for example, the read/write control circuits 68 and 671 can write the drawing data into the display memory 200 in word unit. Moreover, the present invention is applicable to such a controller that controls the content of a data memory and prints it out.

## Claims

1. A graphic controller for painting an area defined in a two-dimensional plane by a first line connecting first and second points (A, C) and a second line connecting third and fourth points (B, D), said first and second lines intersecting with each other at an intersection point (P), said controller comprising receiving means (2) for receiving coordinate data of each of said first, second, third and fourth points, detection means (3, 4, 5) responsive to the coordinate data supplied from said receiving means for detecting said intersection point (P), and painting means (6) for painting a first area (500) defined by said first, third and intersection points (A, B and P) and a second area defined by said second, fourth and intersection points (C, D and P), **characterized** in that said first and second points (A, C) have different X-coordinate values from each other and said third and fourth points (B, D) have different X-coordinate values from each other so that neither said first line nor said second line runs in parallel to an X-axis or a Y-axis of said two-dimensional plane, that said detection means includes coordinate producing means (3, 4) responsive to X-coordinate values of said first, second, third and fourth points (A, B, C and D) for producing respective first X-coordinate values on said first line and respective second X-coordinate values on said second line and comparing means (5) for comparing each one of said first X-coordinate values with the associated one of said second X-coordinate values at each related Y-coordinate value to detect said intersection point (P).

2. The controller as claimed in claim 1,
**characterized** in that said comparing means (5) outputs a comparison signal (51) which takes a first logic level when said first X-coordinate value is equal to or smaller than the associated second X-coordinate value and takes a second logic level when said first X-coordinate value is larger than the associated second X-coordinate value.

3. The controller as claimed in claim 2,
**characterized** in that said painting means (6) responds to said comparison signal (51) and paints said first area (500) from the first X-coordinate value on said second line to the associated first X-coordinate value on said first line in said one direction.

4. The controller as claimed in claim 3,
**characterized** in that said painting means (6) includes a drawing circuit (63) for drawing a starting X-coordinate value to an ending X-coordinate value in said one direction and an X-coordinate exchanging circuit (63) for supplying said drawing circuit with said first X-coordinate value as said starting X-coordinate and said associated second X-coordinate value as said ending X-coordinate value, when said comparison signal (51) takes said first logic level, and with said first X-coordinate value as said ending X-coordinate value and said associated second X-coordinate value as said starting X-coordinate value, when said said comparison signal takes said second logic level.

5. The controller as claimed in claim 2,
**characterized** in that said painting means (6) responds to said comparison signal (51) and paint said first area (500) from the first X-coordinate value on said first line to the associated second X-coordinate value on said second line in one direction and said second area (501) from the first X-coordinate value on said first line to the associated second X-coordinate value on said second line in an opposite direction.

6. The controller as claimed in claim 5,
**characterized** in that said painting means (6) includes a first drawing circuit (652) activated by said first logic level of said comparison signal (51) and drawing from a starting X-coordinate value to an ending X-coordinate value in said one direction and a second drawing circuit (651) activated by said second logic level of said comparison signal (51) and drawing a starting X-coordinate value to an ending X-coordinate value in said opposite direction, that said first X-coordinate value on said first line is supplied in common to said first and second drawing circuits as said starting X-coordinate values thereof, and that said second X-coordinate value on said second line is supplied in common to said first and second drawing circuits as said ending X-coordinate values thereof.

## Patentansprüche

1. Graphikkontroller zur Kennzeichnung einer Fläche, die in einer zweidimensionalen Ebene durch eine erste Linie, die einen ersten und einen zweiten Punkt (A, C), und eine zweite Linie, die einen dritten und einen vierten Punkt (B, D) verbindet, definiert ist, wobei die erste und die zweite Linie sich an einem Schnittpunkt (P) schneiden, wobei der Kontroller eine Empfangseinrichtung (2) aufweist, zum Empfang von Koordinatendaten jeweils des ersten, des zweiten, des dritten als auch des vierten Punktes, eine Detektiereinrichtung (3, 4, 5), die auf die von der Empfangseinrichtung empfangenen Koordinatendaten zur Detektierung des Schnittpunktes (P) anspricht, und eine Kennzeichnungseinrichtung (6) zur Kennzeichnung einer ersten Fläche (500), die durch den ersten, den dritten und den Schnittpunkt (A, B und P) definiert ist, und einer zweiten Fläche, die durch den zweiten, den vierten und den Schnittpunkt (C, D und P) definiert ist,
dadurch **gekennzeichnet,** daß der erste und der zweite Punkt (A, C) voneinander unterschiedliche X-Koordinatenwerte aufweisen und der dritte und der vierte Punkt (D, B) voneinander unterschiedliche X-Koordinatenwerte aufweisen, so daß weder die erste Linie noch die zweite Linie parallel zur X-Achse oder der Y-Aches der zweidimensionalen Ebene verlaufen, daß die Detektoreinrichtung eine Koordinaten-Erzeugungseinrichtung (3, 4) aufweist, die abhängig von den X-Koordinatenwerten des ersten, des zweiten, des dritten und des vierten Punktes (A, B, C und D) arbeitet, zur Erzeugung entsprechender erster X-Koordinatenwerte auf der ersten Linie und entsprechender zweiten Koordinatenwerte auf der zweiten Linie und durch eine Vergleichseinrichtung (5) zum Vergleich jedes einen der ersten X-Koordinatenwerte mit dem zugeordneten einen der zweiten X-Koordinatenwerte bei jedem entsprechenden Y-Koordinatenwert zur Erfassung des Schnittpunktes (P).

2. Kontroller nach Anspruch 1,
dadurch **gekennzeichnet,** daß die Vergleichseinrichtung (5) ein Vergleichssignal (51) erzeugt, das einen ersten Logikpegel einnimmt, wenn der erste X-Koordinatenwert gleich oder geringer ist als der zugeordnete zweite X-Koordinatenwert, und einen zweiten Logikpegel einnimmt, wenn der erste X-Koordinatenwert größer ist als der zugeordnete zweite X-Koordinatenwert.

3. Kontroller nach Anspruch 2,
dadurch **gekennzeichnet,** daß die Kennzeichnungseinrichtung (6) auf das Vergleichssignal (51) antwortet und die erste Fläche (500) vom ersten X-Koordinatenwert auf der zweiten Linie zum zugeordneten ersten X-Koordinatenwert auf der ersten Linie in dieser einen Richtung kennzeichnet.

4. Kontroller nach Anspruch 3,
dadurch **gekennzeichnet,** daß die Kennzeichnungseinrichtung (6) eine Zeichnungsschaltung (63) aufweist, um einen Anfangs-X-Koordinatenwert zu einem End-X-Koordinatenwert in dieser einen Richtung zu zeichnen, und eine X-Koordinaten-Austauschschaltung (63) zur Zuführung an die Zeichnungsschaltung, des ersten X-Koordinatenwertes als den Anfangs-X-Koordinatenwert und des zugeordneten zweiten X-Koordinatenwertes als den End-X-Koordinatenwert, wenn das Vergleichssignal (51) den ersten Logikpegel einnimmt, und des ersten X-Koordinatenwertes als den End-X-Koordinatenwert und des zugeordneten zweiten X-Koordinatenwertes als den Anfangs-X-Koordinatenwert, wenn das Vergleichssignal den zweiten Logikpegel einnimmt.

5. Kontroller nach Anspruch 2,
dadurch **gekennzeichnet,** daß die Kennzeichnungseinrichtung (6) auf das Vergleichssignal (51) antwortet und die erste Fläche (500) vom ersten X-Koordinatenwert auf der ersten Linie zum zugeordneten zweiten X-Koordinatenwert auf der zweiten Linie in einer Richtung kennzeichnet und die zweite Fläche (501) von dem ersten X-Koordinatenwert auf der ersten Linie zum zugeordneten zweiten X-Koordinatenwert auf der zweiten Linie in der entgegengesetzten Richtung kennzeichnet.

6. Kontroller nach Anspruch 5,
dadurch **gekennzeichnet,** daß die Kennzeichnungseinrichtung (6) eine erste Zeichnungsschaltung (652) aufweist, die durch den ersten Logikpegel des Vergleichssignals (51) aktiviert wird und von einem Anfangs-X-Koordinatenwert zu einem End-X-Koordinatenwert in dieser einen Richtung zeichnet, und eine zweite Zeichnungsschaltung (651), die durch den zweiten Logikpegel des Vergleichssignals (51) aktiviert wird und von einem Anfangs-X-Koordinatenwert zu einem End-X-Koordinatenwert in der entgegengesetzten Richtung zeichnet, daß der erste X-Koordinatenwert auf der ersten Linie gemeinsam der ersten und der zweiten Zeichnungsschaltung als Anfangs-X-Koordinatenwert zugeführt wird, und daß der zweite X-Koordinatenwert auf der zweiten Linie gemeinsam der ersten und der zweiten Zeichnungsschaltung als End-X-Koordinatenwert zugeführt wird.

## Revendications

1. Contrôleur graphique pour colorier une zone définie dans un plan bi-dimensionnel par une première ligne reliant des premier et second points (A, C) et une seconde ligne reliant des troisième et quatrième points (B, D), lesdites première et seconde lignes se coupant mutuellement à un point d'intersection (P), ledit contrôleur comprenant un moyen de réception (2) pour recevoir les données de coordonnée de chacun desdits premier, second, troisième et quatrième points, un moyen de détection (3, 4, 5) répondant aux données de coordonnée délivrées à partir dudit moyen de réception pour détecter ledit point d'intersection (P) et un moyen de coloriage (6) pour colorier une première surface (500) définie par lesdits premier, troisième points et par le point d'intersection (A, B et P), et une seconde surface définie par lesdits second et quatrième points et le point d'intersection (C, D et P), caractérisé en ce que lesdits premier et second points (A, C) présentent des valeurs de coordonnée X différentes l'une de l'autre et les troisième et quatrième points (B, D) présentent des valeurs de coordonnée X différentes l'une de l'autre de sorte que ni ladite première ligne ni ladite seconde ligne se trouvent parallèles à un axe X ou à un axe Y dudit plan bi-dimensionnel, en ce que ledit moyen de détection comporte un moyen de production de coordonnée (3, 4) répondant aux valeurs de coordonnée X desdits premier, second, troisième et quatrième points (A, B, C et D) afin de produire des premières valeurs de coordonnée X respectives sur ladite première ligne et des secondes valeurs de coordonnée X respectives sur ladite seconde ligne et un moyen de comparaison (5) pour comparer chaque valeur desdites premières valeurs de coordonnée X à la valeur associée desdites secondes valeurs de coordonnée X à chaque valeur de coordonnée concernée afin de détecter ledit point d'intersection (P).

2. Contrôleur selon la revendication 1, caractérisé en ce que le moyen de comparaison (5) sort un signal de comparaison (51) qui prend un premier niveau logique lorsque ladite première valeur de coordonnée X est égale ou inférieure à la seconde valeur de coordonnée X associée et prend un second niveau logique lorsque ladite première valeur de coordonnée X est supérieure à la seconde valeur de coordonnée X associée.

3. Contrôleur selon la revendication 2, caractérisé en ce que ledit moyen de coloriage (6) répond audit signal de comparaison (51) et colorie ladite première surface (500) à partir de la première valeur coordonnée X sur ladite seconde ligne jusqu'à la première valeur de coordonnée X associée sur ladite première ligne dans ledit premier sens.

4. Contrôleur selon la revendication 3, caractérisé en ce que ledit moyen de coloriage (6) comporte un circuit de dessin (63) pour dessiner une valeur de coordonnée X de début jusqu'à une valeur de coordonnée X de fin dans ladite première direction et un circuit d'échange de coordonnée X (63) pour délivrer audit circuit de dessin ladite première valeur de coordonnée X comme ladite coordonnée X de début et ladite seconde valeur de coordonnée X associée comme ladite valeur de coordonnée X de fin, lorsque ledit signal de comparaison (51) prend ledit premier niveau logique et avec ladite première valeur de coordonnée X comme ladite valeur de coordonnée X de fin et ladite seconde valeur de coordonnée X associée comme ladite valeur de coordonnée X de début, lorsque ledit signal de comparaison prend ledit second niveau logique.

5. Contrôleur selon la revendication 2, caractérisé en ce que ledit moyen de coloriage (6) répond audit signal de comparaison (51) et colorie ladite première surface (500) à partir de la première valeur de coordonnée X sur ladite première ligne jusqu'à la seconde valeur de coordonnée X associée sur ladite seconde ligne dans une première direction et ladite seconde surface (501) à partir de la première valeur de coordonnée X sur ladite première ligne jusqu'à la seconde valeur de coordonnée X associée sur ladite seconde ligne dans une direction opposée.

6. Contrôleur selon la revendication 5, caractérisé en ce que ledit moyen de coloriage (6) comporte un premier circuit de dessin (652) activé par ledit premier niveau logique dudit signal de comparaison (51) et dessinant à partir d'une valeur de coordonnée X de début jusqu'à une valeur de coordonnée X de fin dans ladite première direction et un second circuit de dessin (651) activé par ledit second niveau logique dudit signal de comparaison (51) et dessinant une valeur de coordonnée X de début jusqu'à une valeur de coordonnée X de fin dans ladite direction opposée, en ce que ladite première valeur de coordonnée X sur ladite première ligne est délivrée en commun auxdits premier et second circuits de dessin comme lesdites valeurs de coordonnée de X de début et en ce que la seconde valeur de coordonnée X sur ladite seconde ligne est délivrée en commun auxdits premier et second circuits de dessin comme lesdites valeurs de coordonnée X de fin.
